Europäisches Patentamt

(19) European Patent Office

Office européen des brevets

(11) Publication number: **0 066 218**
**B1**

# (12) EUROPEAN PATENT SPECIFICATION

(45) Date of publication of patent specification: **02.10.85**

(51) Int. Cl.⁴: **G 02 B 6/32**

(21) Application number: **82104469.0**

(22) Date of filing: **21.05.82**

(54) **Device for the controlled transmission of light from one optical fibre to another.**

(30) Priority: **22.05.81 JP 74775/81**

(43) Date of publication of application:
**08.12.82 Bulletin 82/49**

(45) Publication of the grant of the patent:
**02.10.85 Bulletin 85/40**

(84) Designated Contracting States:
**DE FR GB**

(56) References cited:
**DE-A-2 722 367**
**DE-A-2 828 989**
**US-A-4 087 158**

**APPLIED OPTICS, Vol. 19, No. 7, April 1980,**
**Pages 1127-1138**
**APPLIED OPTICS, Vol. 19, No. 12, June 1980,**
**Pages 2011-2018**

(73) Proprietor: **SUMITOMO ELECTRIC INDUSTRIES**
**LIMITED**
**No. 15, Kitahama 5-chome Higashi-ku**
**Osaka-shi Osaka-fu (JP)**

(72) Inventor: **Hayashi, Kyozo**
**1-3, Shimaya 1-chome Konohana-ku**
**Osaka-shi Osaka (JP)**
Inventor: **Noda, Shigeru**
**1-3, Shimaya 1-chome Konohana-ku**
**Osaka-shi Osaka (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

### Background and summary of the invention

The present invention relates to a device for the controlled transmission of light from one optical fiber to another comprising the features of the generic part of claim 1.

The matter priorly published by DE—OS— 27 22 367 concerns a device for the connection of the ends of optical fibers without loss, which mainly consists of a body with axial holes aligned with each other for receiving a pair of optical fibers so as to form a light path, a pair of sleeves mounted in said axial holes and formed with central holes, a pair of lenses mounted with a gap therebetween, in a cylindrical forward portion of said central holes of said sleeves, each of said lenses being correspondingly cylindrically shaped, and a pair of plugs mounted in a rearward portion of said central holes of said sleeves and formed with axial holes for holding the ends of said optical fibers therein. With this structure wellknown in the prior art it is possible to connect two fibers in a relatively simple manner with a satisfying degree of exactness. The transmission of light can be controlled by pressing the optical elements (fibers and/or lenses) more or less with the elastical sleeves into the body and bringing them more or less into or out of optical focus.

However, the axial length of the structure is relatively high and it is not possible to insert a controlling element into the light path.

It is further known by the journal "Applied Optics", Vol. 19, No. 7, April 1980, pages 1127— 1138, as well as "Applied Optics" Vol. 19, No. 12, June 1980, pages 2011—2018, to insert plug-in attenuators or any other appropriate control element into a gap of a light path between the ends of two optical fibers provided with rod lenses.

However, these publications are more or less theoretical and do not deal with the problem how the fibers and the other optical elements are connected exactly.

It is also further known to insert a screen between opposed ends of a pair of optical fibers so as to intermittently interrupt the light transmitted thereby, the transmission of light through the two optical fibers is intermittent, depending on the frequency of interruption. In more detail, a pair of optical fibers are placed in alignment with each other with a gap left between their ends and a rotating disc with a hole or a slit is placed between the opposed ends of the optical fibers with the hole or slit aligned with the optical fibers. The light transmitted from one optical fiber passes through the hole or slit in the rotating disc to the other optical fiber. Thus, optical pulses whose number depends on the revolutions of the disc are produced. This can be utilized to measure the speed of rotation, etc.

In such an arrangement, the light from one of the optical fibers diverges from its end surface so that only part of the light is incident on the end surface of the other optical fiber, because of the gap between the optical fibers.

It is an object of the present invention to provide a device for the controlled transmission of light from one optical fiber to another, which can transmit light with a minimum of loss and allows the insertion of a control element in the light path, for instance a light chopping propeller.

This object is solved according to the invention for an optical connector of the above mentioned kind by the features, that the device is adapted for intermittent interruption of light transmitted between the optical fibers, the body therefore comprising a pair of opposed transversal walls into which said axial holes for receiving the fibres are formed, said transversal walls having a gap therebetween which opens towards the outside while extending substantially transversally to said axial holes, so as to enable the insertion of an appropriate interruption element through the light path, such as a propeller, that said axial holes have a frustoconical forward portion for receiving a correspondingly frustoconical forward portion of said sleeves, that said rearward portion of said central hole of each sleeve is frustoconically shaped for receiving a correspondingly frustoconical forward portion of each of said plugs, that said frustoconical forward portion of each of said sleeves is provided with a plurality of radial slits, that each of said plugs is formed with a flange, that a cap nut is engaged with said flange and threads on said body to fasten said plug to said body, so that said frustoconical forward portion of each of said sleeves is urged into tight contact with said frustoconical forward portion of each of said axial holes.

By this feature a device for controlled transmission of light is provided which is compact in size and which guarantees a quick, self-centering and therefore exact assembling with as little loss as possible.

Other features and advantages of the present invention will become apparent from the following description taken with reference to the accompanying drawings, in which:

### Brief description of the drawings

Fig. 1 is a sectional view of the body of an optical connector embodying the present invention;

Fig. 2 is a partial sectional view of the embodiment; and

Fig. 3 is a plan view of the sleeve.

### Detailed description of the invention

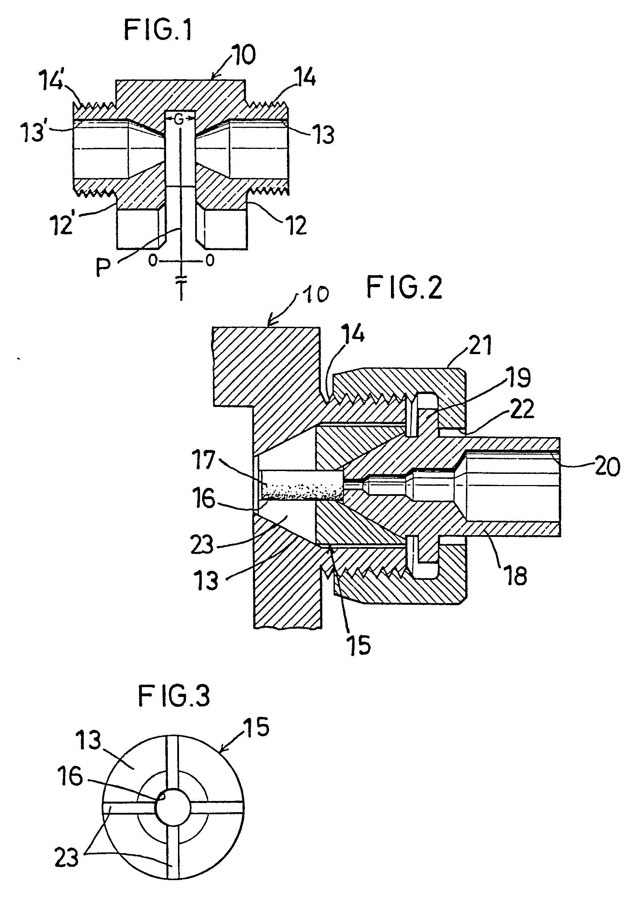

Referring to Fig. 1, a connector body 10 for supporting two optic fibers is made of metal or plastic. It has an opposed pair of walls 12, 12' with a gap G left therebetween. These walls are each formed with a hole 13 (13') to hold the end of an optical fiber therein. The holes are aligned to each other. The connector body 10 is formed with a thread 14 (14') of the outer periphery at each end thereof to receive a knurled nut which will be described later.

Referring to Fig. 2, a partial sectional view of a preferred embodiment of this invention is shown but with an optical fiber omitted. A conical metal sleeve 15 is mounted in the mounting hole 13. The sleeve is formed with a central hole 16 in which a rod lens 17 is fastened in position. In the preferred embodiment, the rod lens is fastened in such a position that its inner end slightly projects inwardly beyond the inner wall of the sleeve 15. The sleeve has a plurality of axial slits 23 to give it flexibility, as shown in Fig. 3, so that the rod lens will be fastened in position.

A plug 18 has a head of such a frustoconical shape as to be received in the conical inner surface of the sleeve 15. The entire plug 18 may be made of metal or its front portion may be made of hard rubber or elastomer and its rear portion made of metal. It is formed with a flange 19 slightly behind its head. It is also formed with a stepped hole 20 so as to receive the end of an optical fiber. The hole has different diameters changing steppedly toward its front end to receive the end of the fiber which consists of a conductor, a primary covering, a reinforcement layer, and a secondary covering. The hole 16 of the sleeve 15 is adapted to be aligned with the hole 20 of the plug 18.

When assembling the optical connector of this invention, the sleeve 15 in which the rod lens 17 is secured is firstly mounted in the hole 13 of the connector body 10 and then the plug 18 carrying an optical cable is mounted in the sleeve 15. Finally a knurled nut 21 with a hole 22 is screwed on the connector body with the thread 14 to urge the flange 19 on the plug 18 forwardly, thereby clamping the plug 18 against the sleeve 15.

The optical fiber used generally has a conductor of quartz glass or plastic, a primary covering thereon, a reinforcing layer of such a material as aromatic polyamide (aramide) fiber and a secondary covering which is the outermost layer. The reinforcing layer is provided to reinforce the conductor which is extremely thin and has a small mechanical strength. The coverings at end of the optical fiber are peeled so as to be received in the stepped hole 20 of the plug 18. The primary covering is peeled so that the conductor will be long enough to protrude slightly beyond the end of the plug 18.

After the optical fiber with its end treated has been mounted in the plug 18, the rear end of the plug is caulked to fasten the optical fiber to the plug so that the conductor will not come off under a pulling force even though the reinforcing layer, etc. are present between the conductor and the inner wall of the plug.

After caulking, the portion of the fiber projecting from the plug tip is cut off so as to be flush with the end surface of the plug. This assures that when the plug 18 is completely mounted in the sleeve 15, the end of the conductor abuts the end surface of the rod lens 17. Since the rod lens used has a diameter of about 1 mm whereas the diameter of the conductor is as small as 50 µm at

most, the conductor is kept substantially aligned with the rod lens.

Although the connection of an optical fiber to one wall 12 has been described above, the same is true for the connection to the other wall 12'. The optical connector is so constructed that a pair of optical fibers are connected thereto so as to be aligned with each other.

In operation, a pair of the optical fibers are connected in the abovementioned manner with the gap G therebetween to the optical connector of the present invention. When a source of light is connected to one of the optical fibers, the flux of light passes from the one optical fiber through the two rod lenses to the other optical fiber by which it is transmitted to a desired place. By using rod lenses having a refractive index which is the larger at a position the closer to its axis, the light can be transmitted with a minimum of transmission loss in spite of the presence of the gap.

If in Fig. 1 a propeller P rotates about the axis of rotation O—O in the gap G, for example, the light passing through the connector is intermitted by the propeller. The intermission of light is used to measure the number of revolutions of the propeller in a given period of time, for example.

**Claim**

A device for the controlled transmission of light from one optical fiber to another comprising:

— a body (10) with axial holes (13, 13') aligned with each other for receiving a pair of optical fibers so as to form a light path,
— a pair of sleeves (15) mounted in said axial holes (13, 13') and formed with central holes (16),
— a pair of lenses (17) mounted with a gap therebetween, in a cylindrical forward portion of said central holes (16) of said sleeves (15), each of said lenses being correspondingly cylindrically shaped, and
— a pair of plugs (18) mounted in a rearward portion of said central holes (16) of said sleeves (15) and formed with axial holes (20) for holding the ends of said optical fibers therein, characterized in
— that the device is adapted for intermittent interruption of light transmitted between the optical fibers, the body (10) therefore comprising a pair of opposed transversal walls (12, 12') into which said axial holes (13, 13') for receiving the fibers are formed, said transversal walls having a gap therebetween which opens towards the outside while extending substantially transversally to said axial holes (13, 13'), so as to enable the insertion of an appropriate interruption element through the light path, such as a propeller (P),
— that said axial holes (13, 13') have a frustoconical forward portion for receiving a correspondingly frustoconical forward portion of said sleeves (15),

— that said rearward portion of said central hole (16) of each sleeve (15) is frustoconically shaped for receiving a correspondingly frustoconical forward portion of each of said plugs (18),

— that said frustoconical forward portion of each of said sleeves (15) is provided with a plurality of radial slits (23),

— that each of said plugs (18) is formed with a flange (19),

— that a cap nut (21) is engaged with said flange and threads (14, 14') on said body to fasten said plug (18) to said body (10), so that said frustoconical forward portion of each of said sleeves (15) is urged into tight contact with said frustoconical forward portion of each of said axial holes (13, 13').

## Patentanspruch

Vorrichtung zur steuerbaren Lichtübertragung von einer optischen Faser zu einer anderen mit:

— einem Grundkörper (10) mit axialen Durchlässen (13, 13'), die miteinander fluchten, für die Aufnahme eines Paars von optischen Fasern, um so einen Lichtweg zu bilden,

— einem Paar von Hülsen (15), die in den axialen Durchgängen (13, 13') befestigt sind und mit Mittellöchern (16) ausgebildet sind,

— einem Paar von Linsen (17), die mit einem Spalt dazwischen in einem zylindrischen Vorderteil der Mittellöcher (16) der Hülsen (15) befestigt sind, wobei jede der Linsen entsprechend zylindrisch geformt ist, und

— einem Paar von Steckern (18), die im hinteren Teil der Mittellöcher (16) der Hülsen (15) befestigt sind und axiale Durchlässe (20) aufweisen, zum Halten der Enden der optischen Fasern darin, dadurch gekennzeichnet, daß die Vorrichtung ausgestaltet ist für eine intermittierende Unterbrechung des zwischen den optischen Fasern übertragenen Lichtes, daß der Grundkörper (10) deshalb ein Paar von gegenüberstehenden Querwänden (12, 12'), aufweist, in welchen die axialen Durchlässe (13, 13') zum Aufnehmen der Fasern ausgebildet sind, wobei die Querwände einen Spalt dazwischen aufweisen, der sich zur Außenseite öffnet, während er sich im wesentlichen quer zu den axialen Durchlässen (13, 13'), erstreckt, um so die Einfügung eines geeigneten Unterbrechungselementes, wie eines Propellers (P) in den Lichtweg zu ermöglichen,

— daß die axialen Durchlässe (13, 13') einen kegelstumpfförmigen Vorderteil zur Aufnahme des entsprechend kegelstumpfförmigen Vorderteils der Hülsen (15) aufweisen, daß der rückwärtige Teil des Mittelloches (16) jeder Hülse (15) kegelstumpfförmig ausgebildet ist zum Aufnehmen eines entsprechend kegelstumpfförmigen Vorderteils eines der Stecker (18),

— daß der kegelstumpfförmige Vorderteil jeder der Hülsen (15) mit einer Vielzahl von radialen Schlitzen (23) versehen ist,

— daß jeder der Stecker (18) mit einem Flansch (19) versehen ist,

— daß eine Überwurfmutter (21) mit dem Flansch und den Gewinden (14, 14') auf dem Grundkörper in Eingriff steht, um den Stecker (18) am Grundkörper (10) zu befestigen, so daß der kegelstumpfförmige Vorderteil jeder Hülse (15) in engen Kontakt mit dem kegelstumpfförmigen Vorderteil eines jeden der axialen Durchlässe (13, 13') gedrückt wird.

## Revendication

Dispositif pour la transmission contrôlée de lumière d'une fibre optique à une autre, comprenant:

— un corps (10) présentant des ouvertures axiales (13, 13') alignées entre elles pour recevoir une paire de fibres optiques de manière à former un trajet lumineux,

— une paire de manchons (15) montés dans les ouvertures axiales (13, 13') et percès d'ouvertures centrales (16),

— une paire de lentilles (17) montées avec un jeu entre elles, dans une portion cylindrique antérieure desdites ouvertures centrales (16) des manchons (15), chacune desdites lentilles ayant une configuration cylindrique correspondante, et

— une paire d'obturateurs (18) montés dans une portion postérieure des ouvertures centrales (16) des manchons (15) et présentant des ouvertures axiales (20) pour le maintien des extrémités des fibres optiques à l'intérieur,

— caractérisé en ce que le dispositif est agencé pour l'interruption intermittente de la lumière transmise entre les fibres optiques, le corps (10) comprenant à cet effet une paire de parois transversales opposées (12, 12') dans lesquelles lesdites ouvertures axiales (13, 13') pour recevoir les fibres sont disposées, lesdites parois transversales définissant entre elles un intervalle qui débouche vers l'extérieur tout en s'étendant sensiblement perpendiculairement auxdites ouvertures (13, 13'), de façon à permettre l'introduction dans le trajet lumineux d'un élément interrupteur approprié tel qu'une tige (P),

— en ce que les ouvertures axiales (13, 13') ont une portion avant tronconique pour recevoir une portion avant tronconique correspondante des manchons (15),

— en ce que ladite portion postérieure de l'ouverture centrale (16) de chaque manchon (15) présente une configuration tronconique pour recevoir la portion avant tronconique correspondante de chacun des obturateurs (18),

— en ce que la portion avant tronconique de chacun des manchons (15) présente une pluralité de fentes radiales (23),

— en ce que chacun des obturateurs (18) comporte une collerette (19), et

— en ce qu'un écrou à chapeau (21) s'engage sur ladite collerette et sur des filets (14, 14') prévus sur ledit corps pour fixer l'obturateur (18) sur le corps (10), de façon que la portion avant tronconique de chacun desdits manchons (15) soit pressée en contact étroit contre la portion avant tronconique de chacune desdites ouvertures axiales (13, 13').

## FIG.1

## FIG.2

## FIG.3